# EUROPEAN PATENT SPECIFICATION

(11) **EP 2 770 568 B1**
(45) Date of publication and mention of the grant of the patent: **10.08.2016**
(21) Application number: 13156754.7
(22) Date of filing: 26.02.2013
(51) Int. Cl.: H01M 8/18

(54) **Electrolyte formulations for use in redox flow batteries**
Elektrolytformulierungen zur Verwendung in Redox-Flussbatterien
Formulations d'électrolyte pour utilisation dans des batteries à flux redox

(43) Date of publication of application: 27.08.2014
(73) Proprietor: FUNDACIÓ INSTITUT DE RECERCA EN ENERGIA DE CATALUNYA, 08930 Barcelona (ES)
(72) Inventor: RUBIO GARCIA, Javier, 08930 SANT ADRIÀ DE BESÒS (ES); SKOUMAL I CANALS, Marcel, 08930 SANT ADRIÀ DE BESÒS (ES); FLOX DONOSO, Cristina, 08930 SANT ADRIÀ DE BESÒS (ES); MORANTE LLEONART, Juan Ramon, 08930 SANT ADRIÀ DE BESÒS (ES)
(74) Representative: Oficina Ponti, SLP

(56) References cited:
- WO-A1-89/05526
- US-A1- 2012 077 079
- US-A1- 2012 107 661
- US-B1- 6 562 514
- DATABASE COMPENDEX [Online] May 2011 (2011-05), L. LI ET AL: "A stable vanadium redox-flow battery with high energy density for large-scale energy storage", XP002699531, Database accession no. E20122915248204 & L. LI ET AL: "A stable vanadium redox-flow battery with high energy density for large-scale energy storage", ADVANCED ENERGY MATERIALS, vol. 1, no. 3, 11 March 2011 (2011-03-11), pages 394-400, DOI: 10.1002/AENM.201100008

## Description

### Field of the invention

The present invention relates to the field of flow batteries. In particular, the present invention relates to stabilized electrolyte formulations for use in flow batteries.

### Background

In a redox flow battery, the energy is chemically stored within two independent solutions in which electroactive species are dissolved. The solutions are pumped towards the electrodes, the device delivers its energy through electrochemical oxidation and reduction processes inducing changes in oxidation state of the soluble species. Contrary to other energy storing devices such as Li-ion batteries or supercapacitors, the configuration of a flow battery allows for independent scalability of power and energy capacity.

Many different redox couples have been studied as electroactive species including bromide/polysulphide, Mn(II)/Mn(III) Ce(III)/Ce(IV) or soluble Pb. However, the best results for a flow battery in terms of efficiency, cost and durability are obtained using solutions of vanadium in the electrolyte both in the cathodic (VO²⁺ / VO₂⁺) and anodic (V³⁺ / V²⁺). Indeed, such systems, named all-vanadium redox flow batteries (VRBs), have reached actual industrialization.

Regardless to the specific definition of the active species, the redox flow battery present as a main limitation a low energy density due to the low solubility and stability of the species in solution (trend to precipitate). Typically, the maximum concentration described at a pilot scale is lower than 5 mol dm⁻³ for a vanadium/bromide system (US 7,320,844 B2) or lower than 1.8 mol dm⁻³ for an all vanadium cells (at 40°C).

The use of stabilizing agents such as inorganic salts, surfactants or other organic molecules (US 6,143,443, US 6,562,514 and US 7,078,123) have resulted in an enhancement of the energy capacity of the battery. This is observed as a consequence of the role of the added species as precipitation inhibitor (also observed using chloride ions as additive, Advanced Energy Materials, Vol. 1, 394-400, 2011).

Documents US 6,620,547 B1, US 2011045351 A1 and WO 9842037 A1 show examples providing the use of polymers to build-up components for energy storage devices including electrodes, membranes or electrolytes.
Document US2012/107661 discloses a redox flow battery including a positive electrode electrolyte and a negative electrode electrolyte, each of which includes a metal-ligand coordination complex, in which a metal of a metal-ligand coordination complex of the positive electrode electrolyte is different from a metal of a metal-ligand coordination complex of the negative electrode electrolyte.
Document US2012/077079 discloses a redox flow battery system having a supporting solution that contains Cl- ions which when mixed with SO₄²⁻ can provide increased energy density and improved stability and solubility of one or more of the ionic species in the catholyte and/or anolyte.
Document WO 89/05526 discloses an all-vanadium redox battery having a catholyte and an anolyte, a positive carbon electrode and a negative carbon electrode and which includes stabilizing/kinetic enhancing ions in the catholyte and hydrogen inhibiting ions in the anolyte.
In view of prior art, introducing additives with the purpose of improving the redox flow battery performance with molecules with a high molecular weight such as polymers would not be a recommended strategy due to:
i) The additive can cause an increase of the electrolyte viscosity which is undesirable, since it would lead to energy losses due to the higher energy required for pumping the electrolyte.
ii) Formation of high molecular weight adducts due to interaction between the electroactive species and functional groups of the polymer. Precipitation processes could be observed due to gravity.

The present inventors have surprisingly found that electrolyte formulations for flow batteries using polymeric additives as disclosed in the present invention allowed for having flow batteries with two simultaneous effects:
- Electrolyte stability is kept within a wider temperature range
- Energy capacity of the flow battery raised 10-70% comparing with a standard electrolyte with the same concentration of redox active species.

None of the previous documents disclosed electrolyte formulations which enable to have flow batteries with such effects.

### Brief description of the drawings

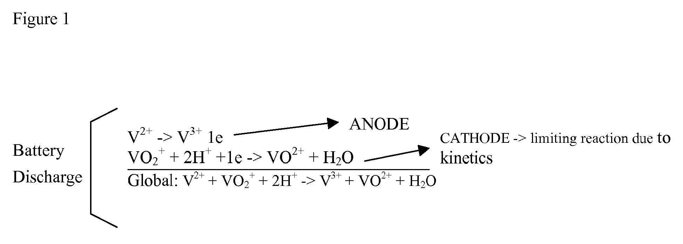

Figure 1 depicts the chemical reactions in a VRB (vanadium redox flow batteries).
Figure 2 depicts the vanadium (V) concentration in the liquid phase at 40°C over time using as conditions 3 mol dm⁻³ of V(V) and 0.6% w/v of dendritic poly(ethyleneimine) (also known as dPEI).
Figure 3 depicts the voltammetric study of a V(V)/V(IV) redox couple.
Figure 4 depicts the redox behavior of dPEI in H₂SO₄ using a graphite felt electrode.
Figure 5 depicts the energy capacity values for the standard electrolyte (lower dashed-line) and the additive-containing one (upper dashed-line) as a function of the cycle number.
Figure 6 depicts Cyclic voltammetry analysis as a function of the amount of dPEI.
Figure 7 depicts Cyclic voltammetry analysis with dendritic polyglycerol with 50% functionalization amine.
Figure 8 depicts Cyclic voltammetry with the redox couple: Fe(III)/Fe (II).
Figure 9 depicts the behavior in a non-aqueous system: an organic solvent (acetonitrile).
Figure 10 depicts the battery performance using an electrolyte with additive and a vanadium concentration of 1 mol dm⁻³.
Figure 11 depicts the evolution of the battery capacity over charge/discharge cycling of the pilot cell for plain 1M electrolyte and 1M electrolyte with additive.
Figure 12 depicts the battery performance with an electrolyte which is 3 mol dm⁻³ vanadium.

### Description of the invention

The present invention relates to a stabilized electrolyte for use in flow batteries comprising an additive or a mixture thereof. Even though said electrolyte is preferably a stabilized aqueous electrolyte, non-aqueous systems such as ionic liquids or organic solvents can also be used.

The term "additive" is understood in the present invention as a branched polymer, a hyperbranched polymer, a dendrimer, a dendron or a mixture thereof, which, when added to a liquid solution of one or more electroactive species, leads to a redox flow battery with higher energy capacity for a given concentration of the mentioned electroactive species.

The specific additive is chosen considering whether the solution is going to be used as an anolyte or as a catholyte.

In the present invention, as shown above, said additive is a branched polymer, a hyperbranched polymer, a dendrimer, a dendron or a mixture.

The term "branched polymer" is understood in the present invention as a chemical compound or mixture of compounds built by repeating structural units in which a covalently bonded chain is replacing one of the substituent (hydrogen atom or other monomer subunit). One of the major characteristics of these molecules is their statistically size dispersion as a consequence of their synthesis procedure based on the reaction of monomer molecules.

The terms "hyperbranched polymer" or "dendrimer" are understood in the present invention as molecules which are branched species characterized by a perfectly defined and symmetric structure while showing monodisperse size and nearly perfect three dimensional structure. They consist of three major components: cores, branches and end groups. Such characteristics are the result of the synthetic procedure which is based on an interactive sequence of reactions steps as a bottom-up approach from a starting core.

The term "dendron" is understood in the present invention as molecules having the same characteristics of a dendrimer of hyperbranched polymers being the only difference the synthetic approach. In this case, instead of applying a reaction procedure to an initial core, a molecule with a single chemically addressable group (focal point) is reacted following a series of repetitive steps.

In a preferred embodiment, the additive of the present invention is selected from the group consisting of poly(ethyleneimine), polyamidoamine, polypropyleneimine, cyclotriphosphazene, polyglycerol, thiophosphoryl, polyacrylonitrile, cis-1,4-polybutadiene, trans-1,4-polybutadiene, poly(1-butene), polybutylene terephthalate, polycaprolactam, polycarbonate, poly(2,6-dimethyl-1,4-phenylene ether), polyether etherketone, polyetherimide, polyethylene, polyethylene hexamethylene dicarbamate, polyethylene oxide, polyethylene sulfide, polyethylene terephthalate, polyhexamethyleneadipamide, poly(hexamethylene sebacamide), polyimide, polyisobutylene, poly(p-methylstyrene), polyoxymethylene, poly pentamethylene hexamethylene dicarbamate, poly(m-phenyleneisophthalamide), poly(phenylene oxide), poly(p-phenylene sulfide), poly(p-phenyleneterephthalamide), polypropylene, polypropylene oxide, polystyrene, polytetrafluoroethylene, polyurethane, polyvinyl chloride, polyvinylidene fluoride, poly(vinylmethyl ether).

In a more preferred embodiment, said additive (including preferred additives from the list above) is a dendrimer or a hyperbranched polymer. More preferably, said additive is a dendritic poly(ethylene imine) (also known as dPEI), still more preferably said dendritic poly(ethylene imine) has a molecular weight raging from 0.3 to 750 kDa. Preferably, said dendritic poly(ethylene imine), regardless of its molecular weight, is present in a concentration between 0.001% and 30% weight per volume of electrolyte.

In a preferred embodiment, the flow battery configuration is selected from one of the following redox couples at the cathode and the anode:
Cathode: V⁵,/V⁴⁺, F₂/F⁻, O₂/O₂⁻, O₃/O₂, Ag²⁺/Ag⁺, Co³⁺/Co²⁺, N₂O/N₂, Ce⁴⁺/Ce³⁺, Au⁺/Au, Mn⁷⁺ /Mn⁴⁺ , Ni⁴⁺ /Ni²⁺, Mn³+/Mn²⁺, Pb⁴⁺/Pb²⁺, Au³⁺/Au⁺, Cl₂/Cl⁻, Ti³⁺/Ti²⁺, Mn⁴⁺/Mn²⁺, Cu²⁺/Cu⁺, Pu⁵⁺/Pu⁴⁺, Br₂,/Br⁻, I⁵⁺/I⁻, Fe³⁺/Fe²⁺, Pu⁴⁺/Pu³⁺, Hg²⁺/Hg₂²⁺, U⁵⁺/U⁴⁺ , Ag²⁺/Ag⁺, V⁴⁺/V³⁺, Ru³⁺/Ru²⁺, Sn⁴⁺ /Sn²⁺, Cl₂/Cl⁻, I₂/I⁻, Fe³⁺ /F^{e2}+.
Anode: V³⁺/V²⁺ , Np⁴⁺ /Np³⁺, Sn⁴⁺ /Sn²⁺, Sr²⁺/Sr, Ba²⁺/Ba, Ce³⁺/Ce, Zn²⁺/Zn, As⁵⁺/As³⁺, U⁴⁺/U³⁺, Sb⁵⁺/Sb³⁺, S⁴⁺/S²⁺, Ti⁴⁺/Ti²⁺, In³⁺/In²⁺, Ni⁴⁺/Ni²⁺, S/S²⁻, Cr³⁺/Cr²⁺, In²⁺/In⁺, Ti³⁺/Ti²⁺, Eu³⁺/Eu²⁺, Pb²⁺/Pb, Tl⁺/Tl, Ti⁴⁺/Ti³⁺, Na⁺/Na, Li⁺/Li, K⁺/K, Mg⁺/Mg, Mg²⁺/Mg, Ca⁺/Ca, Ca²⁺/Ca, Sr⁺/Sr, Be²⁺/Be.

In another preferred embodiment, the concentration of the redox couples is between 0.02 and 100 mol dm⁻³.

In a more preferred embodiment, the redox couples are V(V)/V(IV) and V(III)/V(II) or Fe (III)/Fe(II) at the cathode and the anode, respectively. More preferably, the concentration of the redox couples V(V)/V(IV) and V(III)/V(II) or Fe(III)/Fe(II) lies between 0.001 and 10 mol dm⁻³.

When an organic solvent is used in a non-aqueous system, this is preferably a polar organic solvent, more preferably a polar organic solvent including, but not limited thereto, acetonitrile, acetone, tetrahydrofuran (THF), acetic acid, acetyl acetone, 2-aminoethanol, aniline, anisole, benzene, benzonitrile, benzyl alcohol, 1-butanol, 2-butanol, *i*-butanol, 2-butanone, *t*-butyl alcohol, carbon disulfide, carbon tetrachloride,chlorobenzene, chloroform, cyclohexane, cyclohexanol, cyclohexanone, di-n-butylphthalate, 1,1-dichloroethane, dichloroethane, diethylamine, diethylene glycol, diglyme, dimethoxyethane (glyme), N,N-dimethylaniline, dimethylformamide (DMF), dimethylphthalate, dimethylsulfoxide (DMSO), dioxane, ethanol, ether, ethyl acetate, ethyl acetoacetate, ethyl benzoate, ethylene glycol, heptane, hexane, methanol, methyl acetate, methyl *t*-butyl ether (MTBE) methylene chloride, 1-octanol, pentane, 1-pentanol, 2-pentanol, 3-pentanol, 2-pentanone, 3-pentanone, 1-propanol, 2-propanol, pyridine, toluene and *p*-xylene, being acetonitrile the most preferred.

When an ionic liquid is used in a non-aqueous system, this is preferably an inorganic salt made of the combination of cations including, but not limited thereto, ammonium, imidazolium, piperidinium, pymolidinium, and sulfonium cations with anions including, but not limited thereto, diethyl phosphate, bromide, iodide, chloride, methylsulfate, dodecylbenzenesulfonate, (trimethylpentyl)phosphinate, dicyanamide, decanoate, triflate, bis(trifluoromethylsulfonyl)imide, 1,1,2,2-tetrafluoroethanesulfonate, perfluorobutanesulfonate, hexafluorophosphate, tetrafluoroborate, sulphate, sulfonate, phosphate, thiocyanate, dicyanamide, acetate, trifluoroacetate, nitrate, tetrachloroferrate, tetrathiocyanocobaltate and methylcarbonate.

The present invention also relates to a flow battery comprising a stabilized electrolyte as disclosed in the different embodiments of the present invention.

The following Examples are offered for illustrative purposes only and are not intended to limit the scope of the present invention in any way.

### Examples

The introduction of polymeric additives in the formulation of a VRB electrolyte, protect the vanadium species from precipitation. Such effect was studied in the case of an electrolyte containing dPEI.

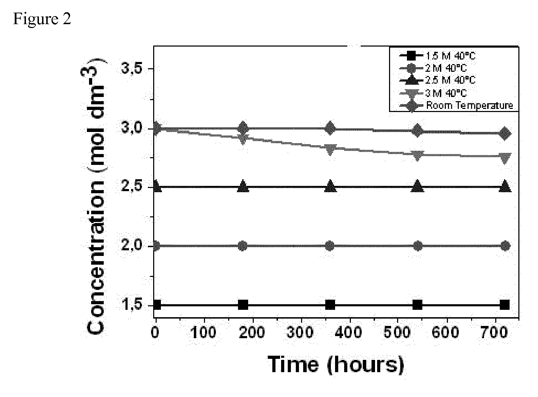

Figure 2 shows the evolution of the concentration in vanadium at 40°C starting from a 3 mol dm⁻³ V(V) solution in 3 mol dm⁻³ H₂SO₄ and 0.6% weight/volume of dPEI. After 720 hours, the concentration in redox active species keeps a value of 2.7-2.8 mol dm⁻³ which corresponds to a 40% raise with respect to maximum vanadium concentration found using a standard electrolyte (without additive). Supersaturated solutions with concentration up to 6 mol dm⁻³ are achievable and stabilized at 60°C for over 10 hours. In the case of organic additives, no precipitation of the electroactive species is observed upon increasing temperature and the stability range lies between -50 °C and 300 °C.

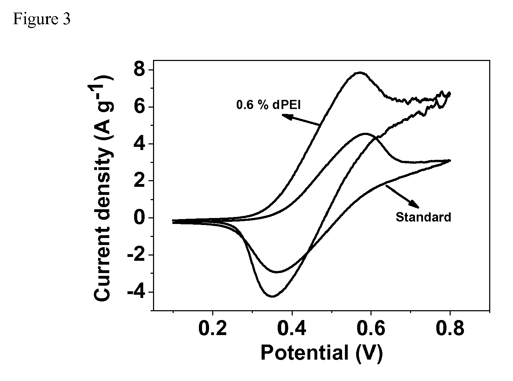

The activity of the dPEI additives was monitored by cyclic voltammetry and compared with a standard additive containing similar concentration of electroactive species (1.5 mol dm⁻³) (Figure 3). The transformation of V(IV) into V(V) is observed at the peak maximum observed for positive current densities the opposite process (V(V) reduction) is observed at negative current densities.

It needs to be pointed out that for aqueous electrolytes the potential is expressed versus a Hg/Hg₂SO₄/K₂SO₄ (sat) reference electrode, being placed into a Luggin capillary, and a platinum wire was employed as the counter electrode. A volume of 30 mL of degassed electrolyte is employed for each experiment.

The voltammogram shown in Figure 3 were recorded using a graphite felt electrode and a 1.5 mol dm⁻³ electrolytic solution of VOSO₄ in 3 mol dm⁻³ H₂SO₄ (standard formulation, black) and a similar electrolyte containing a 0.6 % weight/volume of dPEI (red). Attending to the current densities a huge increase is observed when the electrolyte contains the polymeric additive. More precisely, an increase of 70% for the oxidation process and 40% higher current density for the reduction reaction is experienced. This observation was completely unexpected since a similar concentration of the redox-active species was added in both measurements. It is worth pointing out that current density increments were observed regardless of the nature of the carbonaceous electrode (with or without co-catalysts) in ranges lying between 10-100%.

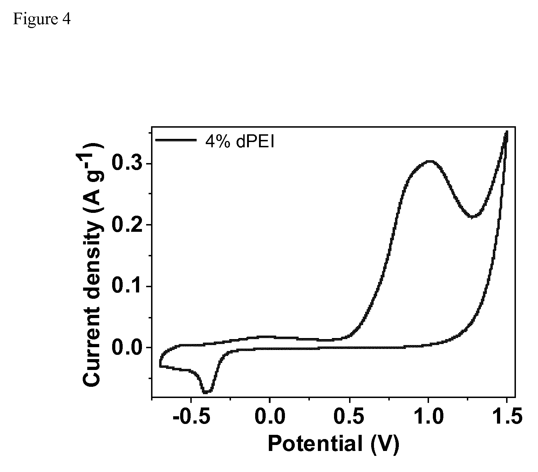

Such current density effect cannot be attributed to simply redox activity of the polymeric additive. Indeed, the behavior of a solution containing 4% weight/volume of dPEI in 3 mol dm⁻³ H₂SO₄ without any redox active species was monitored by cyclic voltammetry evidencing that, although the organic molecule can be oxidized at a potential around 0.95 V, the reversibility of this process is poor and its related current density is extremely low (Figure 4). As a consequence, the redox activity of the additive by itself can be considered as negligible.

### Battery performance with additives(dPEI)

An electrolyte formulation consisting of 1 mol dm⁻³ of VOSO₄ in 3 mol dm⁻³ H₂SO₄ was studied using a pilot scale redox flow battery prototype equipped with graphite felt electrodes in electrical contact with molded graphite conductive plates which had a sputtered layer of a mixture of conductive metals as current collector. The half-cells were separated by a membrane and the electrolyte was pumped from the reservoirs to the cells with a 2-headed peristaltic pump.

### Battery performance using an electrolyte with additive and a vanadium concentration of 1 mol dm⁻³

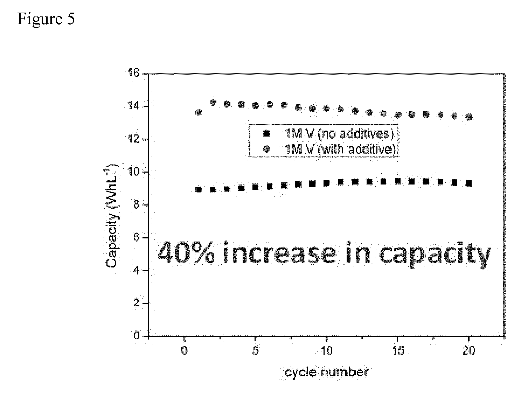

The battery performance was studied for an electrolyte containing 0.6% weight/volume of dPEI at the catholyte. In Figure 5, the energy capacity of the VRB is calculated as function of the cycle number. The black series represent the results from the standard electrolyte and the red dots are linked to the electrolyte containing dPEI.

Surprisingly, for a fixed volume and concentration of the vanadium solution (1 mol dm⁻³), the utilization of dPEI (0.6% weight per volume) leads to longer half-cycles. This behavior is translated into a much larger calculated energy capacity (W h dm⁻³) in presence of dPEI; around 50% compared to the standard electrolyte.

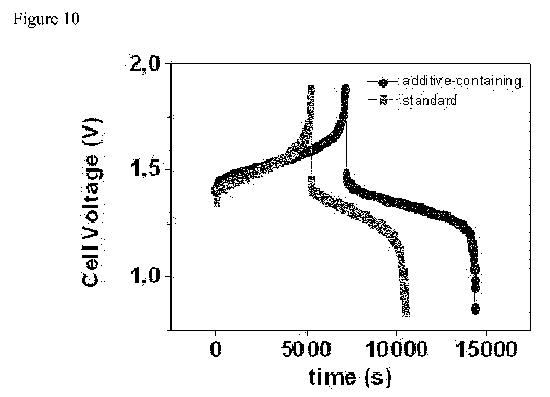

The figure 10 presents one charge and discharge cycle with a current density of 20 mA cm⁻² measured in a pilot vanadium flow battery with a 0.01 dm³ min⁻¹ electrolyte flow (using either standard or additive-containing). For both electrolytes the working potential of the cell keeps unchanged pointing out that the reactions taking place within the battery are not altered. Similarly, the calculation of the efficiency values revealed similar behavior in both cases: voltage efficiency = 85%, Coulombic efficiency = 98% and energy efficiency = 83 %.

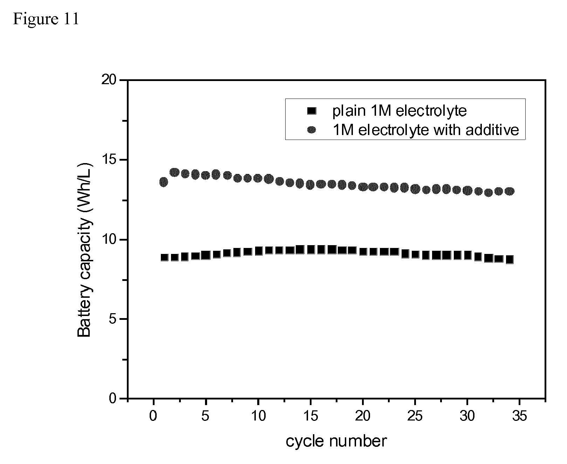

The evolution of the battery capacity over charge/discharge cycling of the pilot cell under the mentioned conditions was monitored (see figure 11). The figure clearly demonstrated that the positive effect of adding 0.6% of dPEI is maintained for more than 35 cycles therefore demonstrating good battery cyclability.

*Battery performance with an electrolyte which is 3 mol dm⁻³ vanadium.*

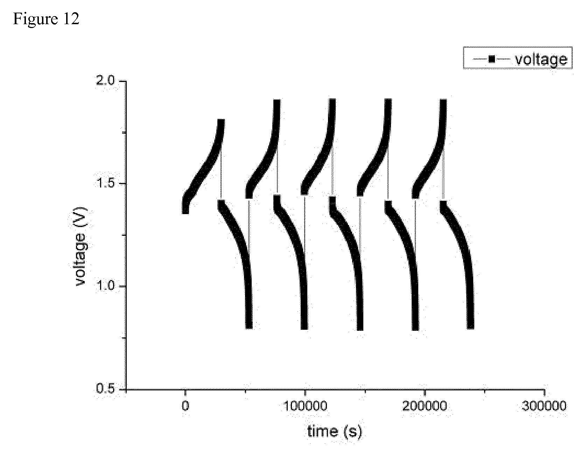

The figure 12 presents five charge and discharge cycles with a current density of 20 mA cm⁻² measured in a pilot vanadium flow battery with a 0.01 dm³ min⁻¹ electrolyte flow (using either a standard or an additive-containing electrolyte). In this case the concentration in vanadium was raised up to 3 mol dm⁻³ . No modification of the characteristics (voltage or time) for the charge and discharge processes is observed among the cycling. Such behavior evidenced good system cyclability.

**Table 1**

| **Electrolyte** | **CE** (Coulombic efficiency) (%) | **VE** (voltage efficiency) (%) | **EE** (energy efficiency) (%) | **Capacity** (**W h dm⁻³)** |
|---|---|---|---|---|
| Standard | **96** | **87** | **85** | **27**.**6** |
| dPEI 0.6 % | **98** | **79** | **77** | **40.1** |

This table presents the characteristics of the battery for a given cycle. Although there is an unexpected decrease of VE and EE with the electrolyte containing dPEI, the amount of extractable energy of the battery per cycle, which enables the device to carry out a determined task, increases by a 60% from 27.6 Wh dm⁻³ to 40.1 Wh dm⁻³. Such capacity values are above the current state of the art of vanadium flow redox batteries. This is an important advantage as the storage capacity of redox flow battery determines the ability of the devices to carry out a given task.

### Cyclic voltammetry analysis as a function of the amount of dPEI:

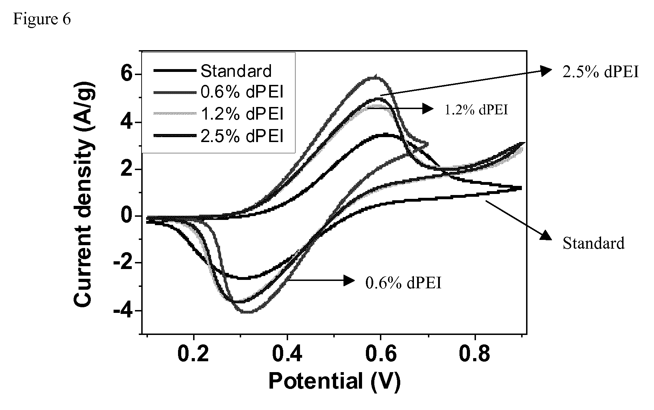

According to figure 6, regardless of the specific amount of dPEI, the cathodic reactions show an increase on the current density which is linked to a battery with increased power density. Additionally upon incorporation of additive, better reaction reversibility is achieved leading to a battery presenting a higher energy capacity and expecting better efficiency.

### Cyclic voltammetry analysis with dendritic polyglycerol with 50% functionalization amine.

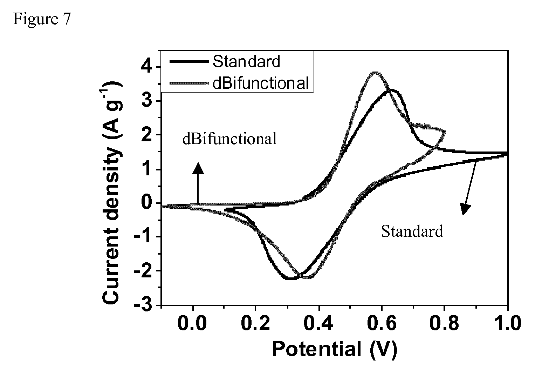

Figure 7 shows that the introduction in the standard electrolyte formulation (1 mol dm-3 in vanadium) of a 0.6% (weight per volume) of the additive dendritic polyglycerol with 50% functionalization amine leads to an increase of the current density and a better process reversibility. Similarly to the case of the dPEI additive, such observation will have a positive impact on the performance of the battery with better power density, energy capacity and efficiency.

### Cyclic voltammetry with the redox couple: Fe(III)lFe (II)

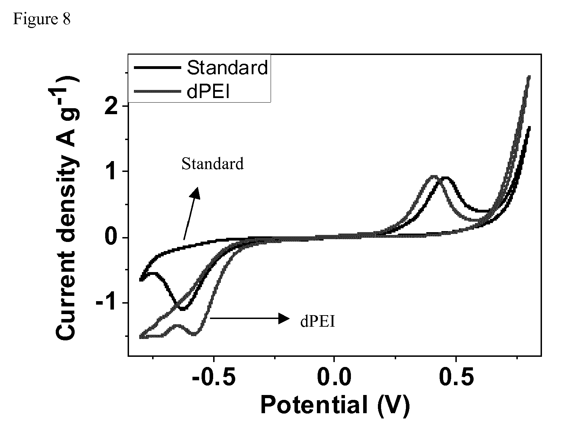

The cyclic voltammetry analysis carried out in this case (figure 8) were based on the formulation of a 0.5 mol dm⁻³ Fe(acac)₃ standard electrolyte in a 3 mol dm⁻³ H₂SO₄ aqueous solution. Similarly to the previous analysis, the working electrode was graphite felt. In this case the reaction observed at positive current density values is the oxidation of Fe(II) into Fe(III) while the opposite reaction is observed at negative current densities.

Comparably to the case of vanadium solutions, comparing the standard formulation to this one containing 0.6% (weight per volume) of dPEI, an increase of the current density and a better process reversibility are evidenced by voltammetry. Such results are translated into a battery with improved power density, energy capacity and eventually better efficiency..

### Behavior in non-aqueous system: organic solvent (acetonitrile)

The composition of the standard electrolyte was in this case 0.1 mol dm⁻³ V(acac)₃ as redox active species, 1 mol dm⁻³ of an imidazolium based ionic liquid as supporting electrolyte and acetonitrile as solvent. The working electrode was graphite felt and the reference electrode was Ag/AgNO₃ (0.01 mol dm⁻³) tetraethylammonaium tetrafluoroborate (0.1 mol dm⁻³) in acetonitrile.

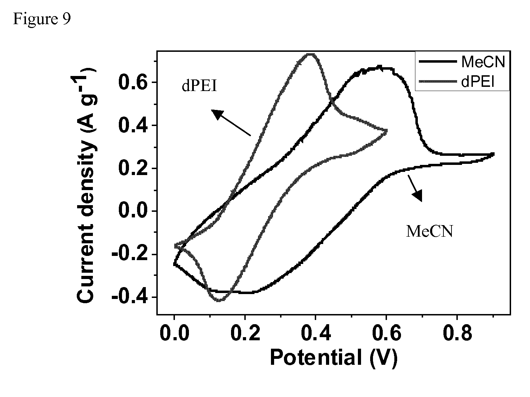

Once again the introduction of dPEI (0.6% weight per volume) leads to a higher current density and a better process reversibility (see figure 9). These observations allow for a battery with improved power density, energy capacity and eventually a better efficiency.

## Claims

1. A stabilized electrolyte for use in flow batteries comprising an additive consisting of a branched polymer, a hyperbranched polymer, a dendrimer, a dendron or a mixture thereof.

2. A stabilized electrolyte according to claim 1, wherein the battery configuration is selected from one of the following:
Cathode: V⁵⁺/V⁴⁺, F₂/F⁻, O₂/O₂⁻, O₃/O₂, Ag²⁺/Ag⁺, Co³⁺/Co²⁺, N₂O/N₂, Ce⁴⁺/Ce³⁺, Au⁺/Au, Mn⁷⁺/Mn⁴⁺, Ni⁴⁺/Ni²⁺, Mn³⁺/Mn²⁺, Pb⁴⁺/Pb²⁺, Au³⁺/Au⁺, Cl₂/Cl⁻, Ti³⁺/Ti²⁺, Mn⁴⁺/Mn²⁺, Cu²⁺/Cu⁺, Pu⁵⁺/Pu⁴⁺, Br₂/Br⁻, I⁵⁺/I⁻, Fe³⁺/Fe²⁺, Pu⁴⁺/Pu³⁺, Hg²⁺/Hg₂²⁺, U⁵⁺/U⁴⁺, Ag²⁺/Ag⁺, V⁴⁺/V³⁺, Ru³⁺/Ru²⁺, Sn⁴⁺/Sn²⁺, Cl₂/Cl⁻, I₂/I⁻, Fe³⁺/Fe²⁺.
Anode: V³⁺/V²⁺, Np⁴⁺/Np³⁺, Sn⁴⁺/Sn²⁺, Sr²⁺/Sr, Ba²⁺/Ba, Ce³⁺/Ce, Zn²⁺/Zn, As⁵⁺/As³⁺, U⁴⁺/U³⁺, Sb⁵⁺/Sb³⁺, S⁴⁺/S²⁺, Ti⁴⁺/Ti²⁺, In³⁺/In²⁺, Ni⁴⁺/Ni²⁺, S/S²⁻, Cr³⁺/Cr²⁺, In²⁺/In⁺, Ti³⁺/Ti²⁺, Eu³⁺/Eu²⁺, Pb²⁺/Pb, Tl⁺/Tl, Ti⁴⁺/Ti³⁺, Na⁺/Na, Li⁺/Li, K⁺/K, Mg⁺/Mg, Mg²⁺/Mg, Ca⁺/Ca, Ca²⁺/Ca, Sr⁺/Sr, Be²⁺/Be.

3. A stabilized electrolyte according to claim 2, wherein the concentration of the redox couples lies between 0.02 and 100 mol dm⁻³.

4. A stabilized electrolyte according to any of the preceding claims, wherein the redox couples are V(V)/V(IV) and V(III)/V(II) or Fe³⁺/Fe²⁺ at the cathode and the anode, respectively.

5. A stabilized electrolyte according to claim 4, wherein the concentration of the redox couples V(V)/V(IV) and V(III)/V(II) is between 0.001 and 10 mol dm⁻³.

6. A stabilized electrolyte according to any of claims 1 to 5, wherein the additive is selected from the group consisting of poly(ethylene imine), polyamidoamine, polypropyleneimine, cyclotriphosphazene dendrimers, polyglycerol, thiophosphoryl dendrimers, polyacrylonitrile, cis-1,4-polybutadiene, trans-1,4-polybutadiene, poly(1-butene), polybutylene terephthalate, polycaprolactam, polycarbonate, poly(2,6-dimethyl-1,4-phenylene ether), polyetheretherketone, polyetherimide, polyethylene, polyethylene hexamethylene dicarbamate, polyethylene oxide, polyethylene sulfide, polyethylene terephthalate, polyhexamethylene adipamide, poly(hexamethylene sebacamide), polyimide, polyisobutylene, poly(p-methylstyrene), polyoxymethylene, polypentamethylene hexamethylene dicarbamate, poly(m-phenyleneisophthalamide), poly(phenylene oxide), poly(p-phenylene sulfide), poly(p-phenyleneterephthalamide), polypropylene, polypropylene oxide, polystyrene, polytetrafluoroethylene, polyurethane, polyvinyl chloride, polyvinylidene fluoride, poly(vinyl methyl ether).

7. A stabilized electrolyte according to claim 6, wherein said additive is a dendrimer.

8. A stabilized electrolyte according to claim 7, wherein said dendrimer is dendritic poly(ethyleneimine).

9. A stabilized electrolyte according to claim 8, wherein said dendritic poly(ethyleneimine) has a molecular weight ranging from 0.3 to 750 kDa.

10. A stabilized electrolyte according to claim 8 or 9, wherein said dendritic poly(ethyleneimine) is present in a concentration between 0.001% and 30% weight per volume of electrolyte.

11. A stabilized electrolyte according to any of claims 1 to 10, wherein the electrolyte is a polar organic solvent.

12. A stabilized electrolyte according to claim 11, wherein said polar organic solvent includes acetonitrile, acetone, tetrahydrofuran (THF), acetic acid, acetyl acetone, 2-aminoethanol, aniline, anisole, benzene, benzonitrile, benzyl alcohol, 1-butanol, 2-butanol, *i*-butanol, 2-butanone, *t*-butyl alcohol, carbon disulfide, carbon tetrachloride,chlorobenzene, chloroform, cyclohexane, cyclohexanol, cyclohexanone, di-n-butylphthalate, 1,1-dichloroethane, dichloroethane, diethylamine, diethylene glycol, diglyme, dimethoxyethane (glyme), N,N-dimethylaniline, dimethylformamide (DMF), dimethylphthalate, dimethylsulfoxide (DMSO), dioxane, ethanol, ether, ethyl acetate, ethyl acetoacetate, ethyl benzoate, ethylene glycol, heptane, hexane, methanol, methyl acetate, methyl *t*-butyl ether (MTBE) methylene chloride, 1-octanol, pentane, 1-pentanol, 2-pentanol, 3-pentanol, 2-pentanone, 3-pentanone, 1-propanol, 2-propanol, pyridine, toluene and *p*-xylene.

13. A stabilized electrolyte according to any of claims 1 to 10, wherein the electrolyte is an ionic liquid.

14. A stabilized electrolyte according to claim 13, wherein said ionic liquid is an inorganic salt made of the combination of cations including ammonium, imidazolium, piperidinium, pyrrolidinium, and sulfonium cations with anions including diethyl phosphate, bromide, iodide, chloride, methylsulfate, dodecylbenzenesulfonate, (trimethylpentyl)phosphinate, dicyanamide, decanoate, triflate, bis(trifluoromethylsulfonyl)imide, 1,1,2,2-tetrafluoroethanesulfonate, perfluorobutanesulfonate, hexafluorophosphate, tetrafluoroborate, sulphate, sulfonate, phosphate, thiocyanate, dicyanamide, acetate, trifluoroacetate, nitrate, tetrachloroferrate, tetrathiocyanocobaltate and methylcarbonate

15. Flow battery comprising a stabilized electrolyte according to any of claims 1 to 14.

## Patentansprüche

1. Ein stabilisiertes Elektrolyt für die Verwendung in Flussbatterien, das ein Additiv aufweist, das aus einem verzweigten Polymer, einem hochverzweigten Polymer, einem Dendrimer, einem Dendron oder einer Mischung derselben besteht.

2. Ein stabilisiertes Elektrolyt gemäß Anspruch 1, bei dem die Batteriekonfiguration aus einem der folgenden ausgewählt ist:
Cathode: V⁵⁺/V⁴⁺, F₂/F⁻, O₂/O₂⁻, O₃/O₂, Ag²⁺/Ag⁺, Co³⁺/Co²⁺, N₂O/N₂, Ce⁴⁺/Ce³⁺, Au⁺/Au, Mn⁷⁺/Mn⁴⁺, Ni⁴⁺/Ni²⁺, Mn³⁺/Mn²⁺, Pb⁴⁺/Pb²⁺, Au³⁺/Au⁺, Cl₂/Cl⁻, Ti³⁺/Ti²⁺, Mn⁴+/Mn²⁺, Cu²⁺/Cu⁺, Pu⁵⁺/Pu⁴⁺, Br₂/Br⁻ , I⁵⁺/I⁻, Fe³⁺/Fe²⁺, Pu⁴⁺/Pu³⁺, Hg²⁺/Hg₂²⁺, U⁵⁺/U⁴⁺, Ag²⁺/Ag⁺, V⁴⁺/V³⁺, Ru³⁺/Ru²⁺, Sn⁴⁺/Sn²⁺, Cl₂/Cl⁻, I₂/I⁻, Fe³⁺/Fe²⁺.
Anode: V³⁺/V²⁺, Np⁴⁺/Np³⁺, Sn⁴⁺/Sn²⁺, Sr²⁺/Sr, Ba²⁺/Ba, Ce³⁺/Ce, Zn²⁺/Zn, As⁵⁺/As³⁺, U⁴⁺/U³⁺, Sb⁵⁺/Sb³⁺, S⁴⁺/S²⁺, Ti⁴⁺/Ti²⁺, In³⁺/In²⁺, Ni⁴⁺/Ni²⁺, S/S²⁻, Cr³⁺/Cr²⁺, In²⁺/In⁺, Ti³⁺/Ti²⁺, Eu³⁺/Eu²⁺, Pb²⁺/Pb, Tl⁺/Tl, Ti⁴⁺/Ti³⁺, Na⁺/Na, Li⁺/Li, K⁺/K, Mg⁺/Mg, Mg²⁺/Mg, Ca⁺/Ca, Ca²⁺/Ca, Sr⁺/Sr, Be²⁺/Be.

3. Ein stabilisiertes Elektrolyt gemäß Anspruch 1, bei dem die Konzentration der Redox-Paare zwischen 0,02 und 100 mol dm⁻³ liegt.

4. Ein stabilisiertes Elektrolyt gemäß einem der vorhergehenden Ansprüche, bei dem die Redox-Paare V(V)/V(IV) und V(III)/V(II) sind.
oder Fe³⁺/Fe²⁺ jeweils an der Kathode beziehungsweise der Anode.

5. Ein stabilisiertes Elektrolyt gemäß Anspruch 4, bei dem die Konzentration der Redox-Paare V(V)/V(IV) und V(III)/V(II) zwischen 0,001 und 10 mol dm⁻³ liegt.

6. Ein stabilisiertes Elektrolyt gemäß einem der Ansprüche 1 bis 5, bei dem das Additiv aus der Gruppe ausgewählt ist, die aus Folgendem besteht:
Poly(ethylenimin), Polyamidoamin, Polypropylenimin, Cyclotriphosphazen-Dendrimere, Polyglycerol, Thiophosphoryl-Dendrimere, Polyacrylonitril, Cis-1,4-Polybutadien, Trans-1,4-Polybutadien, Poly(1-Buten) Polybutylen-Terephthalat, Polycaprolactam, Polycarbonat, Poly(2,6-Dimethyl-1,4-Phenylen Äther), Polyetheretherketon, Polyetherimid, Polyethylen, Polyehtylen-Hexamethylen-Dicarbamat, Polyethylenoxid, Polyethylensulfid, Polyethylenterephthalat, Polyhexamethylenadipamid, Poly(hexamethylensebacamid), Polyimid, Polyisobutylen, Poly(p-Methylstyren), Polyoxymethylen, Polypentamethylen-Hexamethylen-Dicarbamat, Poly(m-Phenylenisophthalamid), Poly(phenylenoxid) Poly(p-Phenylensulfid), Poly(p-Phenylenterephthalamid), Polypropylen, Polypropylenoxid, Polystyren, Polytetrafluoroethylen, Polyurethan, Polyvinylchlorid, Polyvinylidenfluorid, Poly(vinylmethylether).

7. Ein stabilisiertes Elektrolyt gemäß Anspruch 6, bei dem das Additiv ein Dendrimer ist.

8. Ein stabilisiertes Elektrolyt gemäß Anspruch 7, bei dem das Dendrimer ein dendritisches Poly(ethylenimin) ist.

9. Ein stabilisiertes Elektrolyt gemäß Anspruch 8, bei dem das dendritische Poly(ethylenimin) ein Molekulargewicht aufweist, das von 0,3 bis 750 kDa reicht.

10. Ein stabilisiertes Elektrolyt gemäß Anspruch 8 oder 9, bei dem das dendritische Poly(ethylenimin) in einer Konzentration zwischen 0,001% und 30% Gewicht pro Volumen des Elektrolyts vorliegt.

11. Ein stabilisiertes Elektrolyt gemäß einem der Ansprüche 1 bis 10, bei dem das Elektrolyt ein polares organisches Lösungsmittel ist.

12. Ein stabilisiertes Elektrolyt gemäß Anspruch 11, bei dem das polare organische Lösungsmittel Folgendes umfasst: Acetonitril, Aceton, Tetrahydrofuran (THF), Essigsäure, Acetylaceton, 2-Aminoehtanol, Anilin, Anisol, Benzol, Benzonitril, Benzylalkohol, 1-Butanol, 2-Butanol, *i*-Butanol, 2-Butanon, *t*-Butylalkohol, Kohlenstoffdisulfid, Kohlenstofftetrachlorid, Chlorbenzol, Chloroform, Cyclohexan, Cyclohexanol, Cyclohexanon, Di-n-Butylphthalat, 1,1-Dichlorethan, Dichlorethan, Diethylamin, Diethylenglykol, Diglyme, Dimethoxyethan (Glyme), N,N-Dimethylanilin, Dimethylformamid (DMF), Dimethylphthalat, Dimethylsufoxid (DMSO), Dioxan, Ethanol, Ether, Ethylacetat, Ethylacetoacetat, Ethylbenzoat, Ethylenglykol, Heptan, Hexan, Methanol, Methylacetat, Methyl-*t*-Butylether, (MTBE), Methylenchlorid, 1-Octanol, Pentan, 1-Pentanol, 1-Pentanol, 3-Pentanol, 2-Pentanon, 3-Pentanon, 1-Propanol, 2-Propanol, Pyridin, Toluen und *p*-Xylen.

13. Ein stabilisiertes Elektrolyt gemäß einem der Ansprüche 1 bis 10, bei dem das Elektrolyt eine ionische Flüssigkeit ist.

14. Ein stabilisiertes Elektrolyt gemäß Anspruch 13, bei dem die ionische Flüssigkeit ein anorganisches Salz ist, das aus der Kombination von Kationen hergestellt ist, die Ammonium, Imidazolium, Piperidinium, Pyrrolidinium und Sulfonium-Katione umfassen, mit Anionen, die Diethylphosphat, Bromid, Iodid, Chlorid, Methylsulfat, Dodecylbenzolsulfonat, (Trimethylpentyl)phosphinat, Dicyanamid, Decanoat, Triflat, Bis(trifluoromethylsulfonyl)imid, 1,1,2,2-Tetrafluoroethansulfonat, Perfluorbutansulfat, Hexafluorophosphat, Tetrafluoroborat, Sulfat, Sulfonat, Phosphat, Thiocyanat, Dicyanamid, Acetat, Trifluoracetat, Nitrat, Tetrachloroferrat, Tetrathiocyanocobaltat und Methylcarbonat umfassen.

15. Flussbatterie, die ein stabilisiertes Elektrolyt gemäß einem Ansprüche 1 bis 14 aufweist.

## Revendications

1. Électrolyte stabilisé pour batterie à flux comprenant un additif constitué d'un polymère ramifié, un polymère hyper-ramifié, un dendrimère, un dendron ou un mélange de ceux-ci.

2. Électrolyte stabilisé selon la revendication 1, dans lequel la configuration de la batterie est choisie à partir de l'un des éléments suivants :
Cathode : V⁵⁺/V⁴⁺, F₂/F⁻, O₂/O₂⁻, O₃/O₂, Ag²⁺/Ag⁺, Co³⁺/Co²⁺, N₂O/N₂, Ce⁴⁺/Ce³⁺, Au⁺/Au, Mn⁷+/Mn⁴⁺, Ni⁴⁺/Ni²⁺, Mn³⁺/Mn²⁺, Pb⁴⁺/Pb²⁺, Au³⁺/Au⁺, Cl₂/Cl⁻, Ti³⁺/Ti²⁺, Mn⁴⁺/Mn²⁺, Cu²⁺/Cu⁺, Pu⁵⁺/Pu⁴⁺, Br₂/Br⁻, I⁵+/I⁻, Fe³⁺/Fe²⁺, Pu⁴⁺/Pu³⁺, Hg²⁺/Hg₂²⁺, U⁵⁺/U⁴⁺, Ag²⁺/Ag⁺, V⁴⁺/V³⁺, Ru³+/Ru²⁺, Sn⁴⁺/Sn²⁺, Cl₂/Cl⁻, I₂/I⁻, Fe³⁺/Fe²⁺.
Anode : V³⁺/V²⁺, Np⁴⁺/Np³⁺, Sn⁴⁺/Sn²⁺, Sr²⁺/Sr, Ba²⁺/Ba, Ce³⁺/Ce, Zn²⁺/Zn, As⁵⁺/As³⁺, U⁴⁺/U³⁺, Sb⁵⁺/Sb³⁺, S⁴⁺/S²⁺, Ti⁴⁺/Ti²⁺, In³⁺/In²⁺, Ni⁴⁺/Ni²⁺, S/S²⁻, Cr³⁺/Cr²⁺, In²⁺/In⁺, Ti³⁺/Ti²⁺, Eu³⁺/Eu²⁺, Pb²⁺/Pb, Tl⁺/Tl, Ti⁴⁺/Ti³⁺, Na⁺/Na, Li⁺/Li, K⁺/K, Mg⁺/Mg, Mg²+/Mg, Ca⁺/Ca, Ca²⁺/Ca, Sr⁺/Sr, Be²⁺/Be.

3. Électrolyte stabilisé selon la revendication 2, dans lequel la concentration des couples redox se situe entre 0,02 et 100 mol dm⁻³.

4. Électrolyte stabilisé selon une quelconque des revendications précédentes, dans lequel les couples redox sont V(V)/V(IV) et V(III)/V(II)
ou Fe³⁺/Fe²⁺ à la cathode et l'anode,
respectivement.

5. Électrolyte stabilisé selon la revendication 4, dans lequel la concentration des couples redox V(V)/V(IV) et V(III)/V(II) est comprise entre 0,001 et 10 mol dm⁻³.

6. Électrolyte stabilisé selon une quelconque des revendications 1 à 5, dans lequel l'additif est choisi dans le groupe constitué de poly(éthylène imine), polyamidoamine, polypropylène imine, dendrimères cyclotriphosphazènes, polyglycérol, dendrimères thiophosphoryles, polyacrylonitrile, cis-1,4-polybutadiène, trans-1,4-polybutadiène, poly(l-butène), polybutylène téréphtalate, polycaprolactame, polycarbonate, poly(2,6-diméthyl-1,4-phénylène éther), polyétherétherkétone, polyétherimide, polyéthylène, polyéthylène hexaméthylène dicarbamate, oxyde de polyéthylène, sulfure de polyéthylène, polyéthylène téréphtalate, polyhexaméthylène adipamide, poly(hexaméthylène sebacamide), polyimide, polyisobutylène, poly(p-méthylstyrène), polyoxyméthylène, polypentaméthylène hexaméthylène dicarbamate, poly(m-phénylène isophtalamide), poly(oxyde de phénylène), poly(sulfure de p-phénylène), poly(p-phénylène téréphtalamide), polypropylène, oxyde de polypropylène, polystyrène, polytétrafluoroéthylène, polyuréthane, chlorure de polyvinyle, fluorure de polyvinylidène, poly(vinyle-méthyl-éther).

7. Électrolyte stabilisé selon la revendication 6, dans lequel ledit additif est un dendrimère.

8. Électrolyte stabilisé selon la revendication 7, dans lequel ledit dendrimère est un poly(éthylène imine) dendritique.

9. Électrolyte stabilisé selon la revendication 8, dans lequel ledit poly(éthylène imine) dendritique possède une masse moléculaire allant de 0,3 à 750 kDa.

10. Électrolyte stabilisé selon la revendication 8 ou 9, dans lequel ledit poly(éthylène imine) dendritique est présent dans une concentration comprise entre 0,001% et 30% de masse par volume d'électrolyte.

11. Électrolyte stabilisé selon une quelconque des revendications 1 à 10, dans lequel l'électrolyte est un solvant organique polaire.

12. Électrolyte stabilisé selon la revendication 11, dans lequel ledit solvant organique polaire comprend de l'acétonitrile, de l'acétone, du tétrahydrofurane (THF),
de l'acide acétique, de l'acétyl-acétone,
2-aminoéthanol, aniline, anisole, benzène, benzonitrile, alcool benzylique, 1-butanol, 2-butanol, *i*-butanol, 2-butanone, alcool *t*-butylique, disulfure de carbone, tétrachlorure de carbone, chlorobenzène, chloroforme, cyclohexane, cyclohexanol, cyclohexanone, di-n-butylphtalate, 1,1-dichloroéthane, dichloroéthane, diéthylamine, diéthylène glycol, diglyme, diméthoxyéthane (glyme), N,N-diméthylaniline, diméthylformamide (DMF), diméthylphtalate, diméthylsulfoxide (DMSO), dioxane, éthanol, éther, acétate d'éthyl , acétoacétate d'éthyl, benzoate d'éthyl, éthylène glycol, heptane, hexane, méthanol,
acétate de méthyl, méthyl *t*-butyl éther (MTBE), chlorure de méthylène, 1-octanol, pentane, 1-pentanol, 2-pentanol, 3-pentanol, 2-pentanone, 3-pentanone, 1-propanol, 2-propanol, pyridine, toluène et *p*-xylène.

13. Électrolyte stabilisé selon une quelconque des revendications 1 à 10, dans lequel l'électrolyte est un liquide ionique.

14. Électrolyte stabilisé selon la revendication 13, dans lequel ledit acide ionique est un sel inorganique fabriqué par la combinaison de cations incluant l'ammonium, l'imidazolium, le piperidinium, le pyrrolidinium, et des cations sulfonium avec des anions incluant diéthyl phosphate, bromide, iodide, chlorure, méthylsulfate, dodécylbenzènesulfonate, (triméthylpentyl)phosphinate, dicyanamide, décanoate, triflate, bis(trifluorométhylsulfonyl)imide, 1,1,2,2-tétrafluoroéthanesulfonate, perfluorobutanesulfonate, hexafluorophosphate. tétrafluoroborate, sulphate, sulfonate, phosphate, thiocyanate, dicyanamide, acétate, trifluoroacétate, nitrate, tétrachloroferrate, tétrathiocyanocobaltate et méthylcarbonate.

15. Batterie à flux comprenant un électrolyte stabilisé selon une quelconque des revendications 1 à 14.
